# EUROPEAN PATENT APPLICATION

(11) **EP 1 628 483 A1**
(43) Date of publication of application: **22.02.2006**
(21) Application number: 05106279.2
(22) Date of filing: 08.07.2005
(51) Int. Cl.: H04N 7/173, H04M 1/725, H04N 5/50

(54) **Auto search device and a method thereof**

(30) Priority: 09.08.2004 KR 2004062285
(71) Applicant: SAMSUNG ELECTRONICS CO., LTD., Suwon-si, Gyeonggi-do (KR)
(72) Inventor: Yi, Jong-jin, Seoul (KR); Park, Jin-youl, Gyeonggi-do (KR)
(74) Representative: Geary, Stuart Lloyd

(57) **Abstract**

An auto search device for a wireless TV and a method thereof. The auto search device includes: a receiver for receiving a control message with respect to information on a channel; a text message generator capable of displaying a message; a memory for storing information on a searched channel; and a controller for controlling such that an extent of channel search completion is displayed in a text message by driving the text message generator or stored in the memory according to a result of reading the control message from the receiver. Accordingly, since the control message is processed rapidly and effectively, the time required for the auto channel operation can be reduced, and the data loss which occurs due to a wireless characteristic can be compensated.

## Description

### Description

The present invention relates to an auto search device and method. In particular, the invention relates to a device capable of performing an auto search operation safely and effectively in a wireless television (TV) that receives an audio/video (AV) stream in a wireless fashion and displays it, and a method of performing the auto search operation.

An auto search function of a standard TV searches for one or more frequency channels having an effective TV signal by searching from a low frequency to a high frequency. When an effective TV signal has been located, the auto search function assigns a program number to the channel and stores it. Once the auto search operation is completed, a channel can be tuned according to the pre-set program number. During the auto search operation, the program numbers are usually assigned incrementally, starting from the number 1. When the auto search operation is stopped, information on channels that have been searched up to the stoppage are stored and displayed. In case of a Phase Alternation by Line (PAL) TV, an auto sort function is performed immediately after the auto search operation is completed, which sorts the channels according into order based on a table in which a specific program number is assigned to a particular channel of each country.

Information about an ongoing search can be viewed during the auto search operation. A percentage of channel search completion and a current frequency are displayed in real time through an On Screen Display (OSD) or Graphical User Interface (GUI). When a channel is located, information about the located channel and the program number assigned thereto are displayed.

In a wireless TV system that consists of a base station and one or more client TVs, a tuner for tuning a channel is provided in the base station. Hence, the auto search function is performed in the base station. Meanwhile, the client TV displays content from a temporary tuning channel while the auto search is in progress.

During the auto search operation, the client TV updates, in real time, information including a searching frequency from 0 to 888 MHz, an indication of the progress of the search, such as how much of the search has been completed, a number of the located channel and a program number assigned to the located channel, and displays the updated information through an OSD. In particular, in a case of a PAL TV, the information includes a station name.

The content of the tuning channel is transmitted from the base station to the client TV in the form of a compressed AV stream, decompressed by a dedicated decoder of the client TV and displayed in real time.

Information that has to be displayed through the OSD or GUI is transmitted from the base station to the client TV in the form of a command message. The client TV performs a parsing with respect to the command message and performs a suitable OSD or GUI display.

During the auto search operation, since OSD information to be displayed in real time is transmitted for every frequency from 0 to 888 MHz, a huge number of command messages have to be transmitted from the base station to the client TV over a long period of time.

The analysis and processing of the command messages at a software level by the client TV requires much more time than the processing of the compressed AV stream. As a result, there is an inconsistency between the display of the contents of the tuning channel and the display of the OSD information. For example, the tuner may be searching for a channel number 3 after a channel number 2 was tuned, but the OSD information may indicate that the channel number 2 is still being tuned.

Also, because so much time (generally, about 5-6 minutes) is required for the auto search operation, even in the case of a standard TV, a user may become bored. This problem is more marked in a wireless TV system, because a huge number of command messages must be transceived between the base station, which performs the channel search, and the client TV, which displays information to the user.

Also, because of overheads due to the client TV processing the command messages, it takes a considerable time (about 10 minutes) to perform the auto search operation.

In addition, command messages conveyed between the base station and the client TV may be lost due to a variety of factors relating to the wireless TV system. Among information transmitted from the base station to the client TV during the auto search operation, information about located channels is very important. This information is stored in the base station or the client TV for use after the auto search operation is completed. Normally, this information is stored in the client TV because the user uses the client TV to input his/her commands. Therefore, when information about each located channel is transmitted from the base station to the client TV, the client TV has to store the information about the searched channel in a non-volatile memory installed therein. However, when data is lost due to a wireless characteristic, the client TV cannot store the information in the non-volatile memory and thus cannot display the channel information.

The present invention has been developed in order to solve the above problems in the related art. Accordingly, an aspect of the present invention is to provide an auto search device capable of receiving and displaying channel data safely and effectively even in the case of a wireless TV system, and a method thereof.

According to a first aspect of the invention, an auto search device for a wireless transmitting and receiving apparatus comprises a receiver, a memory configured to store information on a located channel and a controller that controls the display of information indicating the progress of a channel search, wherein said receiver is arranged to receive a control message containing information regarding a channel and said controller is arranged to respond to the control message by storing the channel information in the memory.

This aspect further provides a wireless television system including a base station together with at least one wireless transmitting and receiving apparatuses comprising said auto search device.

According to a second aspect of the invention, a base station for transmitting and receiving information from at least one wireless transmitting and receiving apparatus, arranged to perform a channel search and to transmit to the at least one wireless transmitting and receiving apparatus a first message comprising information relating to the progress of the channel search and a second message providing information relating to a located channel wherein said first message is of a smaller size than said second message.

According to a further aspect of the invention, an auto search device for a wireless transmitting and receiving apparatus is provided. The device comprises: a receiver for receiving a control message with respect to information on a channel; a text message generator capable of displaying a message; a memory for storing information on a searched channel; and a controller, if the received control message is a data about a channel frequency, for driving the text message generator to display the text message, and if the received control message is a data about the searched channel, storing the data in the memory.

If the received data is about the searched channel, the controller may update the displayed text message and display the updated text message.

The data about the channel frequency may be smaller in size than the data about the searched channel. For instance, the data about the searched channel consists of a tuned frequency value of 2 bytes, a program number of 2 bytes, a broadcasting station name of tuned broadcasting of 5 bytes, and a sound system or a color system of tuned broadcasting of 1 byte.

The controller may display a frequency value which is now being tuned, a program number, a channel number, a percentage and a progress bar which indicate an extent of channel search completion. The controller may display the percentage and the progress bar which indicate the extent of channel search completion using data on the channel frequency.

According to a yet further aspect of the invention, an auto search method of a wireless transmitting and receiving apparatus having an auto search function comprises: receiving a control message; and displaying an extent of channel search completion in a text message or storing the same in a memory according to a result of reading out the control message.

The displaying step may comprise: displaying a text message if the received control message is a data about a channel frequency; and storing the data in a memory if the received control message is a data about the searched channel. The storing operation may comprise updating the displayed text message and displaying the updated text message.

The text message displaying operation may be performed when each channel is being tuned, and the storing operation is performed when each channel tuning has been completed. The auto search method may further comprise storing all of the searched channel data in the memory when the channel search is completed.

The data about the channel frequency may be smaller than the data about the searched channel. For instance, the data about the searched channel may consist of a tuned frequency value of 2 bytes, a program number of 2 bytes, a broadcasting station name of tuned broadcasting of 5 bytes, and a sound system or a color system of tuned broadcasting of 1 byte.

The text message displaying operation may display a frequency value which is currently being tuned, a program number, a channel number, a percentage and a progress bar which indicate an extent of channel search completion. The percentage and the progress bar, which indicate the extent of channel search completion, may be displayed using data on the channel frequency.

Embodiments of the invention will now be described, by way of example, with reference to the accompanying drawing figures, in which:
Figure 1 is a block diagram showing a wireless receiver according to an first embodiment of the present invention;
Figure 2 is a flowchart showing a method of processing a command message of the wireless receiver; and
Figure 3is a view showing one example of a display when an auto search is in progress.

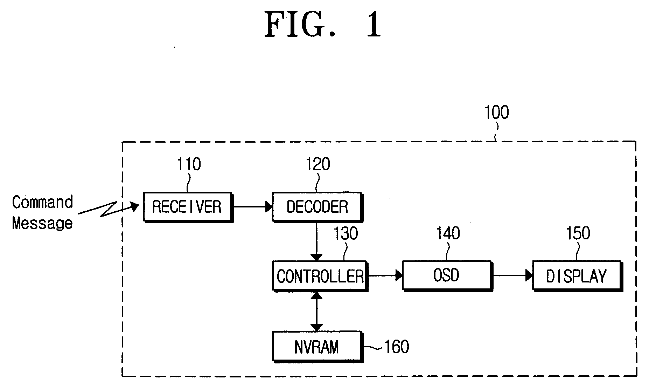

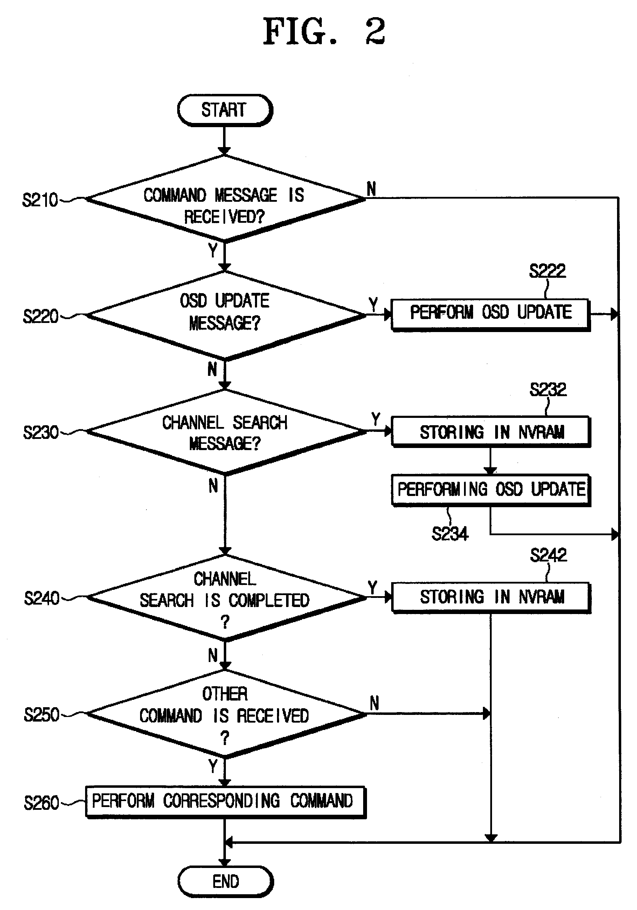

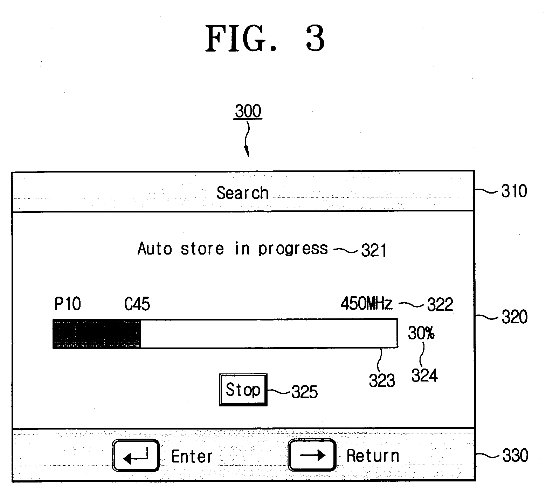

Figure 1 is a block diagram showing main parts of a wireless receiver according to a first embodiment of the present invention, Figure 2 is a flowchart showing a method of processing a command message of a wireless receiver, and Figure 3 is a view showing one example of display when an auto search is in progress.

Referring to Figures 1 to 3, a client TV 100 comprises a receiver 110, a decoder 120, a controller 130, an OSD 140, a display 150 and a non-volatile random access memory (NVRAM 160). The receiver 110 comprises a wireless module and receives an image signal from a transmitter such as a base station (not shown), reads out data of a predetermined unit (e.g. 8 Mbps) from the image signal and sends it to the decoder 120. Also, the receiver 110 transmits a command message received from the transmitter to the decoder 120.

The decoder 120 decodes the image signal transmitted from the wireless receiver 110 and simultaneously transmits the received command message to the controller 130 according to a predetermined protocol.

The controller 130 processes the image signal transmitted from the base station for display on the display 150. Simultaneously, the controller 130 reads out the received command message to display a corresponding message on the display 150 or store corresponding information in the NVRAM 160 by driving the OSD 140. The controller 130 controls the OSD 140 to update and display position information, channel information and a percentage of channel search that has been completed, based on frequency information included in the command message. An OSD window 300 has an upper section 310 for displaying current states of the base station and the client TV, a display section 320 for displaying a channel searching, and a lower section 330 for showing relevant keys. The display section 320 has an "auto search in progress" display part 321 in a first line to display a detail operation of the receiver 110, and a channel display part 322 in a second line to display a position number P10, a current channel number C45 and a frequency (450 MHz) of the channel. A progress bar 323 and a percentage 324 indicating a channel search completion are displayed in the third line. The last line displays the legend "STOP" 325, which enables a user to stop the channel search.

The NVRAM 160, which is as a non-volatile memory, stores information on the located channel under the control of the controller 130. For example, in this embodiment, the NVRAM 160 stores sound information, colour information, a station name, a program number and a channel number of channel that has been tuned. The station name of a Europe-oriented model is expressed in specific characters. The sound information may be expressed by BG, DK, I, M, L, and the colour information may be expressed by NTSC, PAL, SECAM, Auto.

An auto search method for use in the client TV 100 of Figure 1 will be described with reference to Figure 2.

In this embodiment, information received during an auto search operation is divided into two types of information. One is an OSD information message (referred to as an "OSD Update Message", herein below). The OSD information message contains updated information for display, such as a current frequency and a channel search completion percentage, which have to be continuously updated regardless of whether a channel has been located. The other is a located channel information message (referred to as a "Channel Search Message", hereinbelow) such as a channel number and an assigned program number, which have to be updated additionally when a specific channel is located. The "Channel Search Message" includes a station name, which is expressed by characters in a case of a Europe-oriented TV. The "Channel Search Message" is approximately 10 Bytes long, and the "OSD Update Message" is approximately 2 Bytes long, which is relatively short compared with the "Channel Search Message". Therefore, in order to transmit the data safely and rapidly, the data is divided. Also, a progress bar 323 and a percentage 324 can be expressed by frequency information. That is, when a frequency band ranging from 0 to 888 MHz is scanned, a progress bar can be expressed by comparing a received frequency with a frequency band ranging from 0 to 888 MHz and also the percentage can be seen through the progress bar. With reference to the OSD window 300 as shown in FIG. 3, the "OSD Update Message" is about the progress bar 323 and the percentage 324 of channel search completion, and the "Channel Search Message" is about the channel number, the assigned program number, and the station name which is expressed in characters in a case of Europe-oriented TV.

The "Channel Search Message" has to be stored in a non-volatile memory. Also, information on a system and a colour system the client TV manages in addition to the "OSD Update Message" is also transmitted.

When the receiver 110 receives a command message from the base station at step S210, the controller 130 determines whether the received command message is an "OSD Update Message" at step S220. The command message is generally transmitted from the base station to the client TV 100 when an auto search is in progress. If the received command message is determined to be the "OSD Update Message" at step S220, the controller 130 drives the OSD 140 to display the OSD window as shown in FIG. 3 on the display 150, so that a viewer can observe of the progress of the channel search at step S222. The command message received at step S210 is divided into the "OSD Update Message" and the "Channel Search Message" according to an OP code (operation code). In this example, the "OSD Update Message" is consists of frequency data of 2 Bytes. The use of such a relatively short command message makes it possible for the client TV 100 to process the data rapidly. The controller 130 obtains a channel search completion percentage based on the frequency data of 2 Bytes, displays a transmitted frequency value and the obtained percentage on the channel information part 322 and the percentage part 323, respectively. The progress bar 323 corresponding to the percentage is displayed to indicate the extent of channel search completion.

If the command message received at step S220 is determined not to be an "OSD Update Message", it is determined whether it is a "Channel Search Message" (step S230). If the command message is a "Channel Search Message", then the transmitted data is stored in the NVRAM 160 (step S232) and the OSD 140 is controlled to update information displayed in the OSD window 300 at step S234. A "Channel Search Message" may consist of 10 Bytes, each Byte being allocated such that 2 Bytes are used to indicate a value of a tuned frequency value, 2 Bytes to indicate a program number, 5 Bytes to indicate a station name of a tuned broadcast, and 1 Byte to indicate a sound system or a colour system of the tuned broadcast. Since the "Channel Search Message" indicates a result of locating a certain channel, the program number P10 and the channel number C45 of the channel information part 322 are updated and displayed through the OSD.

If the command message is determined not to be a "Channel Search Message" at step S230, the controller 130 determines whether the received command message is a message received after the channel search has been completed, at step S240. This step recovers data that has been lost during the channel search operation (Hereinafter, this operation is referred to as an Auto Sort). In order to avoid a possible disadvantage caused by the stop of the channel search at steps S230 to S232, the information on the located channel is stored in the NVRAM 160. Accordingly, when the channel search is suddenly stopped, it is possible to tune the once-located channel based on the channel information stored in the NVRAM 160. When the auto search is completed, even if a loss of channel information occurs in the middle of performing the auto search operation, the PAL returns the auto-sorted channel information back to the client TV and stores it. Accordingly, even if there occurs a data loss in searching channels, the lost data can be recovered through this procedure.

The NTSC TV which has no auto sort function performs a verification phase to load the total searched channel information continuously after the auto search is completed. This is to respond to any channel information loss.

If the transmitted command message is determined to be a general command unrelated to the channel information, at step S250, a corresponding command is executed and then procedure is completed at step S260. If a command message is not received at step S210 or if the received command message is not the general command or is an error command at step S250, the procedure ends.

As described above, the messages received during an auto search are divided into "Channel Search Messages" and "OSD Update Messages" in order to display the message effectively. Accordingly, when a specific channel is being searched, the client TV processes the relatively shorter "OSD Update Message", whereas at the moment when the channel has been located, the client TV processes the relatively longer "Channel Search Message".

Although, in this embodiment, a text message is displayed by using the OSD 140, a corresponding screen may be configured by the GUI (Graphic User Interface) and stored in the NVRAM 160 or an extra memory. Accordingly, the controller 130 controls such that the GUI is displayed without using the OSD 140.

Since the message received at the receiver is divided into the relatively short "OSD Update Message" and the relatively long "Channel Search Message", the problem of inconsistency between the displayed image of the tuning channel and the display of the OSD information in the prior art can be solved. Furthermore, the client TV can process the control message from the base station rapidly and effectively and thus the time required for the auto channel operation can be reduced.

Also, a data loss, which may occur due to the wireless characteristic, can be rectified by the auto sort procedure of re-transmitting the total channel information continuously.

The foregoing embodiments and advantages are merely examples and are not to be construed as limiting the present invention. The description of the present invention is intended to be illustrative, and not to limit the scope of the claims. Many alternatives, modifications, and variations will be apparent to those skilled in the art. In the claims, means-plus-function clauses are intended to cover the structures described herein as performing the recited function and not only structural equivalents but also equivalent structures.

## Claims

1. An auto search device for a wireless transmitting and receiving apparatus (100), the device comprising:
a receiver (110);
a memory (160) configured to store information on a located channel; and
a controller (130) that controls the display of information indicating the progress of a channel search;
**characterised in that**:
said receiver (110) is arranged to receive a control message containing information regarding a channel; and
said controller (130) is arranged to respond to the control message by storing the channel information in the memory (160).

2. A wireless television system comprising:
a base station; and
at least wireless transmitting and receiving apparatuses (100) comprising an auto search device according to claim 1.

3. A base station for transmitting and receiving information from at least one wireless transmitting and receiving apparatus (100), arranged to perform a channel search and to transmit to the at least one wireless transmitting and receiving apparatus (100) a first message comprising information relating to the progress of the channel search and a second message providing information relating to a located channel;
**characterised in that**:
said base station is configured so that said first message is of a smaller size than said second message.

4. An auto search device for a wireless transmitting and receiving apparatus, the device comprising:
a receiver which receives a control message with respect to information on a channel;
a text message generator capable of displaying a message;
a memory which stores information on a searched channel; and
a controller which controls display of an extent of channel search completion in a text message by driving the text message generator and stores the extent of channel search completion in the memory, according to a result of reading the control message from the receiver.

5. The auto search device as claimed in claim 4, wherein the controller, if the received control message is a data about a channel frequency, drives the text message generator to display the text message, and if the received control message is a data about the searched channel, stores the data about the searched channel in the memory.

6. The auto search device as claimed in claim 4, wherein the controller, if the received data is about the searched channel, updates the displayed text message and displays the updated text message.

7. The auto search device as claimed in claim 5, wherein the controller displays the data about the channel frequency every time when each channel is being tuned, and stores the data about the searched channel in the memory when tuning of each channel is complete.

8. The auto search device as claimed in claim 5, wherein the controller controls storing data about all of the searched channels in the memory when the channel search is complete.

9. The auto search device as claimed in claim 5, wherein the data about the channel frequency is smaller in size than the data about the searched channel.

10. The auto search device as claimed in claim 9, wherein the data about the searched channel comprises a tuned frequency value of 2 bytes, a program number of 2 bytes, a broadcasting station name of tuned broadcasting of 5 bytes, and a sound system or a color system of tuned broadcasting of 1 byte.

11. The auto search device as claimed in claim 4, wherein the controller displays a frequency value which is now being tuned, a program number, a channel number, a percentage and a progress bar which indicate an extent of channel search completion.

12. The auto search device as claimed in claim 11, wherein the controller displays the percentage and the progress bar which indicate the extent of channel search completion using data on the channel frequency.

13. An auto search method of a wireless transmitting and receiving apparatus having an auto search function, the method comprising:
receiving a control message; and
displaying an extent of channel search completion in a text message or storing the extent of channel search completion in the text message in a memory according to a result of reading out the control message.

14. The auto search method as claimed in claim 13, wherein the displaying operation comprises:
displaying the text message if the received control message is a data about a channel frequency; and
if the received control message is a data about the searched channel, storing the data about the searched channel in a memory.

15. The auto search method as claimed in claim 14, wherein the storing operation comprises updating the displayed text message and displaying the updated text message.

16. The auto search method as claimed in claim 14, wherein the text message displaying operation is performed every time when each channel is being tuned, and the storing operation is performed when each channel tuning is completed.

17. The auto search method as claimed in claim 13, further comprising storing all of the searched channel data in the memory when the channel search is completed.

18. The auto search method as claimed in claim 14, wherein the data about the channel frequency is smaller than the data about the searched channel.

19. The auto search method as claimed in claim 18, wherein the data about the searched channel consists of a tuned frequency value of 2 bytes, a program number of 2 bytes, a broadcasting station name of tuned broadcasting of 5 bytes, and a sound system or a color system of tuned broadcasting of 1 byte.

20. The auto search method as claimed in claim 19, wherein the text message displaying operation displays a frequency value which is now being tuned, a program number, a channel number, a percentage and a progress bar which indicate an extent of channel search completion.

21. The auto search method as claimed in claim 20, wherein the percentage and the progress bar which indicate the extent of channel search completion are displayed using data on the channel frequency.
